# EUROPEAN PATENT APPLICATION

(11) **EP 4 768 542 A1**
(43) Date of publication of application: **01.07.2026**
(21) Application number: 24223879.8
(22) Date of filing: 31.12.2024
(51) Int. Cl.: C08L 67/04, C08L 97/00, D01D 5/08, D01F 1/10, D01F 6/62, D01F 6/92, D01D 1/00, B29B 9/16

(54) **FIBER OR FILAMENT COMPRISING LIGNIN AND METHOD FOR OBTAINING SAID FIBER**

(30) Priority: 30.12.2024 PT 2024119946
(71) Applicant: Associação Fibrenamics - Instituto de Inovação em Materiais Fibrosos e Compositos, 4800-058 Guimarães (PT)
(72) Inventor: Miranda Ferreira, Sílvia, 4750-380 Barcelos (PT); Pinheiro Pires Leite, Fernando Luís, 4800-029 GUIMARÃES (PT); Coimbra do Vale, Ana Catarina, 2590-042 Sobral de Monte Agraço (PT); Pinheiro Leite, Liliana Patrícia, 4770-709 Vila Nova de Famalicão (PT); Costa Mota, Carlos Miguel, 4720-535 Amares (PT); Nascimento Pais, Vânia, 4700-442 Braga (PT); de Sousa Bessa Soares, João Luís, 4470-158 Maia (PT); Macedo da Cunha, Fernando Eduardo, 4715-592 Braga (PT); Esteves de Sousa Fangueiro, Raul Manuel, 4715-386 Braga (PT)
(74) Representative: Patentree

(57) **Abstract**

The present disclosure relates to fiber and a method to obtain a fiber/filament comprising lignin, the method comprising the following steps: mixing 60-90 % (v/v) of lignin with a 10 to 40%(v/v) of solvent to obtain a lignin solution; providing polymer pellets; coating the polymer pellets by spraying the lignin solution; drying coated polymer pellets for removing the solvent through evaporation; placing the dried coated pellets into a melt-spinning equipment to obtain the fiber/filament. It also relates a fiber comprising: 70 to 95% (w/w) of a polymer selected from a list consisting of polylactic acid, polyhydroxyalkanoates, polyhydroxybutyrate, polycaprolactone or their mixtures; and 5 to 30% (w/w) of lignin.

## Description

### TECHNICAL FIELD

The present disclosure relates to the field of functional compound fibrous material. More specifically, it relates to a simple and versatile process for incorporating lignin, a renewable and sustainable biomaterial, into melt-spun fibrous materials, through the spray coating of polymeric pellets, before the melt-spinning process.

### BACKGROUND

Due to the limited availability and environmental concerns attributed to petroleum-based products, the use of bio-based polymers derived from renewable resources has become increasingly attractive as a substitute for synthetic polymers. In this regard, the exploitation of biodegradable thermoplastic polymers has emerged as an alternative to developing products for different applications.

Particularly, there are several experimental challenges in producing fibrous materials with suitable mechanical and thermal properties using melt-spinning based on biodegradable thermoplastic matrices. In this sense, the incorporation of natural additives such as lignin has shown potential for better tailoring properties of fibrous materials.

Lignin functionalization through direct incorporation onto polymeric matrices or via surface coating has contributed to overcoming some drawbacks related to intrinsic weak thermal and mechanical properties, commonly attributed to biopolymeric materials. Moreover, lignin is an abundant renewable by-product of the pulp and paper industry, consisting of a complex group of aromatic compounds with high chemical reactivity, and interesting functional properties (antibacterial, antioxidant, anti-flame and anti-ultraviolet properties). Hence, lignin has gained particular attention as a valuable multifunctional additive for developing diverse nano-composite or coated materials. However, lignin impregnation of melt-spun fibrous materials still requires an effective approach. Herein, some previous reports devoted to the biopolymeric materials developed through melt-spinning and lignin functionalization of biopolymeric materials will be mentioned.

Document WO2023183654A2 discloses a method of preparing mono- and multi-component fibers through melt-spinning, comprising polylactic acid and various natural-derived colorants and/or flame retardants, including lignin (up to 20wt%). This method encompasses: the melt-compounding of a first mixture of solids (150°C or 180°C) comprising polylactic acid; the melt-compounding of a second mixture of solids (140°C or 170°C) comprising a bio-derived polyolefin or bio-derived polyethylene; and the coextrusion (150°C or 170°C, take-up speed of about 50-200 m/min) with the previous mixtures to prepare a bicomponent core-sheath fiber with a weight ratio of core to sheath between 80:20 and 60:40. The mixture of solids is prepared using a meltable solvent, as dimethyl sulfone, and for lignin dissolution in a weight ratio with lignin of 1:1. The multi-component fibers obtained has a solid cross-section and linear density of about 35 g/9000 meters to 70 g/9000 meters, which can be useful for textiles applications.

The document AU2021104084A4 discloses a lignin-based nano-film with antibacterial and sunscreen properties. The method comprises the following steps: firstly, dissolving lignin in a solvent; cross-linking lignin with cross-linking agent to obtain lignin with self-polymerization polymer; compounding lignin self-polymerization polymer with antibacterial agent; and preparing lignin-based nano-film with soluble spraying for film-forming. For dissolving lignin, the solvent may include one or more solvent having a hydroxy (-OH) functional group such as distilled water, methyl ethyl ketone, methyl alcohol, ethyl alcohol, isopropyl alcohol, butyl alcohol, ethylene glycol, polyethylene glycol, tetrahydrofuran, dimethylformamide, dimethylacetamide, N-methyl-2-pyrrolidone cyclohexanone, toluene, chloroform, dichlorobenzene, dimethylbenzene, trimethylbenzene, pyridine, methylnaphthalene, nitromethane, acrylonitrile, octadecylamine, aniline, dimethyl sulfoxide, diethylene glycol diethyl ether, terpineol. According to that invention, the lignin-based nano-film is simple to prepare and effective in use, presenting excellent ultraviolet absorption and antibacterial properties with great stability.

Document CN116949810A discloses a lignin-based self-cleaning coating material with wide adaptability as well as preparation method and application of lignin-based self-cleaning coating material. The preparation method comprises dissolving formic acid lignin (1-10 mg/mL) in a mixed system of ethanol and water (volume ratio 10:0-40) for self-assembly; adding ferric chloride into the mixed system to obtain a formic acid lignin-iron ion co-soluble system; and then, placing the substrate in the co-soluble system, dipping, taking out and drying to obtain the coating material. The lignin-based self-cleaning coating material prepared by the invention has better degradability and low cost, and effectively improved hydrophobic properties, stability, and exceptional self-cleaning capability adaptable to a severe environment.

Document KR102569807B1 discloses a lignin-based waterproof coating. On one hand, coating paper with a simple lignin solution can form a highly effective waterproofing and/or reinforcing coating. In another approach, the coating may be formed from lignin and glycerol. The coated lignin is then subjected to a thermal annealing step (120-240ºC) or acid treatment step. Both steps result in the conversion of the lignin coating into a glossy coating that exhibits commercially useful levels of water resistance when dried. It was not recognized in the art that such efficient waterproofing and/or reinforcing coatings could be achieved using lignin as the primary or only waterproofing and reinforcing material.

Document CN115573171A discloses a method of efficient environment-friendly durable antibacterial coating and application of efficient environment-friendly durable antibacterial coating in textiles. The antibacterial fabric prepared by the method comprises a polymer binder and Ag NPs/carboxymethylated lignin antibacterial agent is sprayed onto the fabric and further dried, presenting high efficiency, durability, broad-spectrum, rapid antibacterial performance, no toxicity and safety. According to that invention, only ethanol and water are used as solvents, and the antibacterial fabric is green, safe, simple in process and relatively low in cost.

Document US10066125B2 discloses a lignin-containing coating composition and ultrafine fibers including the same. The coating composition comprises lignin and a carbon material, wherein the carbon material is coated with the lignin with a thickness of 1-20 nm, and a weight ratio of the lignin to the carbon material is less than 40:1 to 3:2, through ultrasonication process and using one or more solvent having a hydroxy (-OH) functional group (e.g. distilled water, methyl ethyl ketone, methyl alcohol, ethyl alcohol, isopropyl alcohol, butyl alcohol, ethylene glycol, polyethylene glycol, tetrahydrofuran, dimethylformamide, dimethylacetamide, N-methyl-2-pyrrolidone cyclohexanone, toluene, chloroform, dichlorobenzene, dimethylbenzene, trimethylbenzene, pyridine, methylnaphthalene, nitromethane, acrylonitrile, octadecylamine, aniline, dimethyl sulfoxide, diethylene glycol diethyl ether, terpineol). Since the coating composition contains lignin, the coated ultrafine fibers have superior antibacterial and biodegradability properties.

The above documents have prepared different composite materials using lignin as an additive, which have not provided a full exploitation of lignin to produce fibers. The documents above focus more on material coating rather than polymeric pellet coating to produce fiber through melt-spinning. On the other hand, different chemical additives, required for the preparation of lignin-based composite materials, impact their biodegradability and their industrial application.

The present disclosure presents a solution that avoids common lignin agglomerations and the use of complex chemical additives.

These facts are disclosed in order to illustrate the technical problem addressed by the present disclosure.

### GENERAL DESCRIPTION

The lignin incorporation into thermoplastic polymers to produce fibers has attracted interest due to a wide range of applications devoted to mechanical and thermal reinforcement. Therefore, is essential to provide an effective lignin incorporation method compatible with biopolymeric matrices processed via melt-spinning.

The present disclosure relates to a method for lignin incorporation into melt-spun fibrous materials by adopting a spray coating technique. Lignin incorporation into biodegradable thermoplastic matrices through the melt-spinning process frequently leads to critical agglomerations that could jeopardise efficient functionalisation.

Therefore, the present disclosure, through the lignin solubilization in a non-toxic solvent system and recurring to the versatile spray-coating strategy, a simple and effective lignin impregnation of melt-spun fibrous materials is obtained, avoiding common lignin agglomerations and the use of complex chemical additives.

The present disclosure relates to a novel and simple method for incorporating lignin into melt-spun fibers. The method provides a straightforward and scalable approach for integrating lignin into biopolymer matrices by spray-coating the biopolymer pellets before the melt-spinning process.

The present disclosure refers that, before the melt-spinning process, thermoplastic pellets are spray-coated with an optimized lignin solution, and appropriately dried to ensure lignin deposition. The lignin spray-coated pellets obtained by this method have a simple preparation, providing an alternative strategy to obtain melt-spun fibrous materials with adequate lignin impregnation, which may result in interesting mechanical properties.

Lignin, as an abundant by-product of the pulp and paper industry, is a highly abundant aromatic polymer with unique properties, such as antioxidant and antibacterial activity, UV resistance, and thermal stability. Its incorporation into polymer fibres not only promotes the development of more sustainable materials, by utilizing a waste-derived resource but also enhances the fibres' properties, depending on the application. However, its direct incorporation in powder form into melt-spinning processes has traditionally posed challenges, including issues with dispersion and compatibility. Problems with dispersion and compatibility can not only compromise the melt-spinning process but also result in fibers with poor properties.

To address these challenges, the present disclosure introduces a method for incorporating lignin into melt-spun fibers by applying it in a liquid solution, before the melt-spinning process. Surprisingly, this approach enables the uniform deposition of a thin lignin layer on the surface of polymer pellets, ensuring homogeneous distribution. During the melt-spinning process, this method effectively mitigates issues related to lignin agglomeration, facilitating the production of a more consistent polymer-lignin compound and fibers with well-defined characteristics.

The present disclosure relates to a method to obtain a fiber/filament comprising lignin, the method comprising the following steps:
mixing 60-90 %(v/v) of lignin with a 10 - 40%(v/v) of solvent to obtain a lignin solution;
providing polymer pellets;
coating the polymer pellets by spraying the lignin solution;
drying coated polymer pellets for removing the solvent through evaporation;
placing the dried coated pellets into a melt-spinning equipment to obtain the fiber/filament.

Preferably the lignin is in a powder format. The particle size of the lignin powder is from 0.1 to 600 µm, and the median being 9.4 µm. The measure can be done by sieving, laser diffraction, images analysis, electron microscopy, among others. Laser diffraction was used for the measurement of the particle size.

In an embodiment, the amount of lignin solution applied to the pellet is from 2% to 50% (w_{lignin solution}/w_{mass of the pellet}), preferably from 3% to 45% (w_{lignin solution}/wₘₐₛₛ of the pellets), more preferably 5% to 30% (w_{lignin solution}/w_{mass of the pellets}).

In an embodiment, it is mixed 70-80 %(v/v) of lignin with a 20 - 30%(v/v) of solvent to obtain a lignin solution.

In an embodiment, the solvent is selected from ethanol, water, acetone, methanol, isopropanol or their mixtures; preferably the solvent is ethanol and water.

In an embodiment, the volumetric ratio of ethanol and water is 70:30.

In an embodiment, the amount of lignin in the solvent is from 40 g/L to 100 g/L.

In an embodiment, the melt-spinning temperature ranges from 120 to 160°C.

In an embodiment, the melt-spinning equipment rotates at a rotation speed from 10 to 80 rpm in the melt-spinning equipment, preferably 20 to 60 rpm, more preferably from 30 to 50 rpm.

In an embodiment, the method comprises a previous step of drying the lignin at a temperature from 40 to 80 °C, preferably 60°C.

In an embodiment, the drying of the coated polymer pellets is at a temperature from 40 to 80 °C for 24h, preferably from 50 to 60°C.

In an embodiment, the polymer is selected from a list consisting of polylactic acid, polyhydroxyalkanoates, polyhydroxybutyrate, polycaprolactone or their mixtures, preferably are of polylactic acid.

In an embodiment, the method comprises a further step of filtering a lignin solution for removing impurities.

It is also disclosed a fiber or a filament comprising:
70 to 95% (w/w) of a polymer selected from a list consisting of polylactic acid, polyhydroxyalkanoates, polyhydroxybutyrate, polycaprolactone or their mixtures; and 5 to 30% (w/w) of lignin.

In an embodiment, the fiber or filament has a tensile strength from 50 to 90 MPa, preferably from 70 to 85 MPa.

In an embodiment, the fiber or filament thermal degradation temperature is above 325°C.

In an embodiment, the dtex of the fiber or filament ranges from 1 to 50; preferably 4 to 30; more preferably 6 to 20.

This method is carried out in four distinct stages. In the first stage, a lignin solution is prepared by dissolving lignin powder in a solvent system designed to optimize lignin solubility while reducing environmental impact. Specifically, an ethanol/water solvent system is employed without the application of heat, to ensure the uniformity of the solution, it was subsequently filtered to remove any undissolved lignin residues.

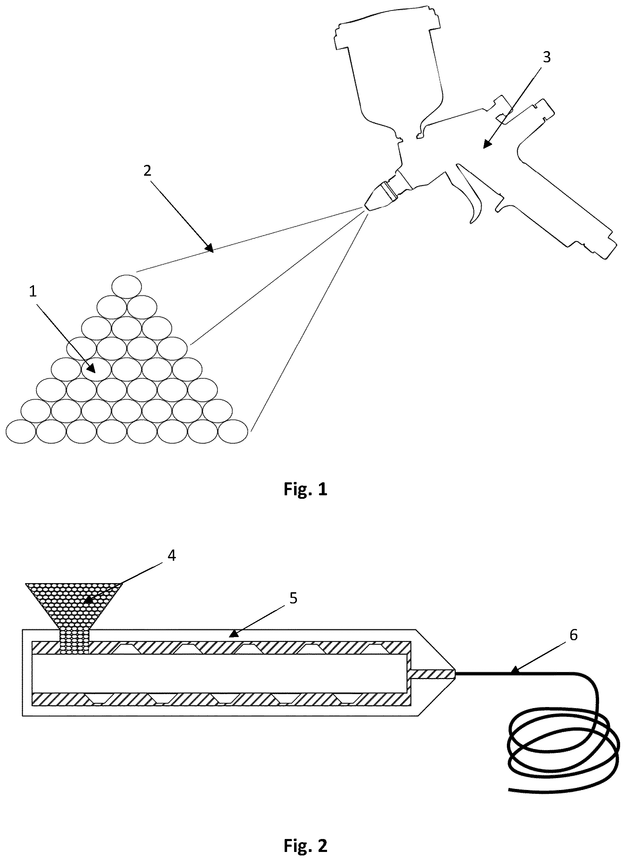

The second stage involves the spray coating of polymer pellets. Before coating, the pellets are dried to eliminate residual moisture. The lignin solution is then uniformly sprayed onto the pellets using spray coating equipment, with a lignin concentration ranging from 5% to 30% (w/w) relative to the mass of uncoated pellets (Figure 1).

After that, the solvent is evaporated to ensure the deposition of the lignin on the surface of the polymer pellets. This step results in lignin-coated pellets that are ready for subsequent processing via the melt-spinning technique in a fourth step (Figure 2), allowing the production of monofilaments or multifilaments, depending on the spinneret used and the final product requirements.

This process represents a practical and sustainable solution for incorporating lignin into biopolymeric fibres, since it uses a non-toxic solvent system and does not require significant modifications to existing melt-spinning equipment or processes. It enables the preparation of fibers containing lignin with suitable properties, leveraging the simplicity of the spray coating technique and the compatibility of the process with industrial-scale production.

The present disclosure offers potential for a wide range of applications in the production of biopolymeric fibers, particularly in contexts where the incorporation of lignin into fibers may be desirable. This new method emphasizes efficiency and versatility, providing a pathway for the development of lignin-containing fibres using established manufacturing technologies.

The fiber produced with this method exhibits improved properties such as tensile strength, thermal resistance and biodegradability.

### BRIEF DESCRIPTION OF THE DRAWINGS

The following figures provide preferred embodiments for illustrating the disclosure and should not be seen as limiting the scope of invention.
**Figure 1****:** Schematic representation of the process for spray coating polymer pellets with a lignin solution, where 1 are the polymer pellets, 2 is the lignin solution to be sprayed onto the pellets, and **3** is the spray coating equipment.
**Figure 2****:** Schematic representation of the melt-spinning process using lignin-coated polymer pellets, where **4** represent the coated pellets feeding into the melt-spinning equipment **5,** and resulting in the production of melt-spun fibers incorporated with lignin **6.**

### DETAILED DESCRIPTION

The present disclosure relates to a method for incorporating lignin into melt-spun fibers, by spray-coating the polymer pellets, in particular, biopolymer pellets, before the melt-spinning process.

The present disclosure refers to a method to obtain a fiber/filament comprising lignin, the method comprising the following steps:
mixing 60 to 90 %(v/v) of lignin with a 10 to 40%(v/v) of solvent to obtain a lignin solution;
providing polymer pellets;
coating the polymer pellets by spraying the lignin solution;
drying coated polymer pellets for removing the solvent through evaporation;
placing the dried coated pellets into a melt-spinning equipment to obtain the fiber/filament.

Following is presented an example, where four distinct steps are applied.

The following pertains to the first step - lignin dissolution.

In this method, Kraft lignin with an average molecular weight of approximately 5000 g/mol is used in powdered form. Before dissolution, the lignin powder is dried at a temperature of 60°C for 24 hours, to remove residual moisture. The dissolution process employs an ethanol/water solvent system in a volumetric ratio of 70:30. The lignin powder is introduced into the solvent system at a concentration ranging from 40 g/L to 100 g/L, under vigorous mechanical stirring, which is maintained overnight at ambient temperature (~25°C) to ensure complete dissolution.

To guarantee the homogeneity and purity of the resulting lignin solution, it is subjected to vacuum filtration. A filter paper with a porosity of 11 µm is used to remove any undissolved residues or impurities, yielding a consistent and uniform solution for subsequent processing.

The following pertains to the second step - spray-coating of biopolymer pellets.

Before the spray coating process, the biopolymer pellets, in particular, PLA pellets, are dried at 60°C for 24 hours to eliminate residual moisture. The dried pellets **1** are subsequently coated with the lignin solution **2** using a spray coating equipment **3.** In this method, the lignin solution is applied in a proportion corresponding to 5% to 30% (w/w) of the total mass of the pellets being coated (see Figure 1).

During the coating process, the pellets are maintained under continuous stirring to ensure uniform distribution of the lignin solution across the surface of the entire batch. This approach facilitates the deposition of a consistent lignin layer on each pellet, ensuring a homogeneous coating for subsequent processing stages.

The following pertains to the third step - solvent evaporation.

To ensure the effective deposition of lignin on the surface of the pellets, the coated pellets are subjected to a Dry process at a temperature of 60°C for 24 hours. This step facilitates the complete evaporation of the ethanol/water solvent system, resulting in the formation of a thin, homogeneous lignin layer uniformly deposited on the surface of each pellet.

The following pertains to the fourth Step - Melt-spinning process.

The coated pellets, specifically the lignin-coated PLA pellets **4,** can be subsequently processed using melt-spinning equipment **5.** The process is conducted at temperatures ranging from 140°C to 160°C, with screw rotation speeds varying between 30 and 50 rpm. Depending on the specifications of the spinneret employed, the coated pellets prepared according to the present disclosure can be utilized to produce either monofilaments or multifilaments **6,** ensuring adaptability to different fibers production requirements.

In an embodiment, **Figure 2** represents the melt-spinning process using lignin-coated polymer pellets where **4** represent the coated pellets feeding into the melt-spinning equipment **5,** for obtaining fibers/filaments **6** with lignin.

Following the procedure described above, PLA monofilaments incorporating lignin can be produced, exhibiting the following mechanical properties:
Tensile strength (MPa): 70 - 85
Deformation (%): 4 - 7
Young' Modulus (GPa): 1-2.

The table below presents the results obtained from samples containing lignin.

**Table 1 - Results obtained for a fiber comprising 5 % (w/w) lignin, 10 % (w/w) lignin and 25 % (w/w) lignin.**

| **Composition** | **Tensile Strength (MPa)** | **Deformation (%)** | **Young' Modulus (GPa)** |
|---|---|---|---|
| 5 % (w/w) lignin | 67.38 | 5.4 | 1.5 |
| 10 % (w/w) lignin | 84.03 | 4.41 | 1.29 |
| 25 % (w/w) lignin | 60.27 | 6.32 | 1.3 |

In an embodiment, it is disclosed a method for incorporating lignin into melt-spun fibers by spray-coating the biopolymer pellets, before the melt-spinning process.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above described embodiments are combinable.

The following claims further set out particular embodiments of the disclosure.

## Claims

1. Method to obtain a fiber/filament comprising lignin, the method comprising the following steps:
mixing 60 to 90 %(v/v) of lignin with a 10 to 40%(v/v) of solvent to obtain a lignin solution;
providing polymer pellets;
coating the polymer pellets by spraying the lignin solution;
drying coated polymer pellets for removing the solvent through evaporation;
placing the dried coated pellets into a melt-spinning equipment to obtain the fiber/filament.

2. Method according to the previous claim wherein the amount of lignin solution applied to the pellet is from 2% to 50% (w_{lignin solution}/w_{mass of the pellet}), preferably from 3% to 45% (w_{lignin solution}/w_{mass of the pellets}), more preferably 5% to 30% (w_{lignin} solution/Wmass of the pellets).

3. Method according to any of the previous claims wherein the mixing of the lignin with the solvent to obtain the lignin solution is at 70 to 80 %(v/v) of lignin and 20 to 30%(v/v) of solvent.

4. Method according to any of the previous claim wherein the solvent is selected from ethanol, water, acetone, methanol, isopropanol or their mixtures; preferably the solvent is ethanol and water; more preferably a volumetric ratio of ethanol: water of 70:30.

5. Method according to any of the previous claims wherein the amount of lignin in the solvent is from 40 g/L to 100 g/L.

6. Method according to any of the previous claims wherein the melt-spinning temperature ranges from 120 to 160°C.

7. Method according to any of the previous claims wherein the melt-spinning equipment rotates at a rotation speed from 10 to 80 rpm in the melt-spinning equipment, preferably 20 to 60 rpm, more preferably from 30 to 50 rpm.

8. Method according to any of the previous claims comprising a previous step of drying the lignin at a temperature from 40 to 80 °C, preferably 60°C.

9. Method according to any of the previous claims wherein the drying of the coated polymer pellets is at a temperature from 40 to 80 °C for 24h, preferably from 50 to 60°C.

10. Method according to any of the previous claims wherein the polymer is selected from a list consisting of polylactic acid, polyhydroxyalkanoates, polyhydroxybutyrate, polycaprolactone or their mixtures, preferably are of polylactic acid.

11. Method according to any of the previous claims comprising a further step of filtering the lignin solution for removing impurities.

12. A fiber or a filament comprising:
70 to 95% (w/w) of a polymer selected from a list consisting of polylactic acid, polyhydroxyalkanoates, polyhydroxybutyrate, polycaprolactone or their mixtures; and 5 to 30% (w/w) of lignin.

13. Fiber or a filament according to any of the previous claims wherein the fiber has a tensile strength from 50 to 90 MPa, preferably from 70 to 85 MPa.

14. Fiber or a filament according to any of the previous claims 12 to 13 wherein the fiber has a thermal degradation temperature above 325°C.

15. Fiber or a filament according to any of the previous claims 12 to 14 wherein the fiber has a dtex ranging from 1 to 50; preferably 4 to 30; more preferably 6 to 20.
